# EUROPÄISCHE PATENTANMELDUNG

(11) **EP 4 068 597 A2**
(43) Veröffentlichungstag der Anmeldung: **05.10.2022**
(21) Anmeldenummer: 22162247.5
(22) Anmeldetag: 15.03.2022
(51) Int. Cl.: H02K 15/12

(54) **IMPRÄGNIEREN EINES STATORS FÜR EINE ELEKTRISCHE MASCHINE**

(30) Priorität: 31.03.2021 DE 102021108257
(71) Anmelder: Valeo eAutomotive Germany GmbH, 91056 Erlangen (DE); Meier Prozesstechnik GmbH, 46395 Bocholt (DE)
(72) Erfinder: DÖRMER, Thomas, 98596 Brotterode-Trusetal (DE); MENZ, Michael, 97618 Hollstadt (DE); SCHLIERF, Adrian, 91126 Schwabach (DE); KLÖTGEN, Joachim, 46414 Rhede (DE)
(74) Vertreter: Dr. Gassner & Partner mbB

(57) **Zusammenfassung**

Bei einem Verfahren zum Imprägnieren eines Stators (101, 201, 301) einer elektrischen Maschine wird der Stator (101, 201, 301) mit einer ersten Menge Imprägnierflüssigkeit (104) bedeckt. Ferner wird eine zweite Menge Imprägnierflüssigkeit (105) unter dem Stator (101, 201, 301) angeordnet, so dass ein unteres Ende (106) des Stators (101, 201, 301) eine Oberflächenschicht (107, 207) der zweiten Menge Imprägnierflüssigkeit (105) berührt Weiterhin wird die Oberflächenschicht (107, 207) der zweiten Menge Imprägnierflüssigkeit (105) horizontal in Bezug auf das untere Ende des Stators (101, 201, 301) bewegt, während das untere Ende des Stators (101, 201, 301) die Oberflächenschicht (107, 207) der zweiten Menge Imprägnierflüssigkeit (105) berührt und die erste Menge Imprägnierflüssigkeit (104), die den Stator (101, 201, 301) bedeckt, ausgehärtet wird.

## Beschreibung

Die Erfindung betrifft ein Verfahren und eine Vorrichtung zum Imprägnieren eines Stators für eine elektrische Maschine.

Der Stator einer bekannten elektrischen Maschine, beispielsweises eines Elektromotors oder eines Generators, weist neben einem Blechpaket (Statorkern) eine Wicklung oder mehrere Wicklungen (Statorwicklungen) auf, die auf dem Statorkern angeordnet beziehungsweise angebracht sind. Die Wicklungen verfügen jeweils über einen elektrischen Leiter, zum Beispiel in Form von elektrisch leitfähigem Metalldraht, den eine Isolationsschicht bedeckt.

Die Wicklungen des Stators müssen mechanisch und elektrisch gefestigt sowie gegen chemische und elektrische Einflüsse geschützt werden. Hierfür wird ein Imprägnierverfahren eingesetzt, bei dem eine Imprägnierflüssigkeit (Imprägnierfluid), beispielsweise ein Harz oder ein Harz-Härter-Gemisch, auf die Wicklungen aufgebracht und danach ausgehärtet wird.

Zum Aufbringen der Imprägnierflüssigkeit auf die Wicklungen kann der Stator mit der Imprägnierflüssigkeit beträufelt werden. Alternativ dazu kann der Stator in eine Imprägnierflüssigkeit eingetaucht werden, wonach der Stator aus der Imprägnierflüssigkeit entfernt wird, wobei ein Teil der Imprägnierflüssigkeit auf dem Stator verbleibt.

Ferner kann zum Aushärten der auf die Wicklungen aufgebrachten Imprägnierflüssigkeit der Stator getrocknet, erwärmt und/oder mit ultraviolettem Licht bestrahlt werden. Beim Aushärten geht die Imprägnierflüssigkeit vom flüssigen Zustand zunächst in einen gelartigen Zustand und dann in einen festen Zustand über. Auf diese Weise wird eine feste Imprägnierung gebildet, welche die Wicklungen bedeckt.

Während des Aushärtens fließt ein Teil der auf die Wicklungen aufgebrachten Imprägnierflüssigkeit aufgrund der Schwerkraft nach unten, was auf den flüssigen beziehungsweise gelartigen Zustand der Imprägnierflüssigkeit zurückzuführen ist. Die heruntergeflossene Imprägnierflüssigkeit kann sich am unteren Ende des Stators in Form von Tropfen sammeln. Ein solcher Tropfen kann eine Länge von bis zu 8 Millimetern erreichen.

Der ausgehärtete Tropfen (Tropfnase) kann folgende Probleme verursachen: erstens kann das Montieren einer elektrischen Maschine, in welche der Stator eingesetzt wurde, dadurch erschwert werden, dass die Tropfnase den für andere Bauteile verfügbaren Bauraum beschränkt. Insbesondere kann die Tropfnase das Aufsetzen eines Gehäusedeckels beziehungsweise Lagerschildes auf ein Gehäuse der Maschine behindern.

Zweitens kann ein Bauteil der fertig montierten elektrischen Maschine, zum Beispiel der Gehäusedeckel beziehungsweise das Lagerschild, auf die Tropfnase drücken, welche den Druck an eine der Wicklungen des Stators weitergibt. Das kann zu einer unerwünschten mechanischen Spannung in der Wicklung beziehungsweise deren Imprägnierung führen, wodurch diese beschädigt wird, beispielsweise aufreißt, womit die Lebensdauer der elektrischen Maschine reduziert werden kann.

Drittens ist es möglich, dass wegen der Tropfnase ein vorgeschriebener Abstand zwischen dem Stator und einem anderen Bauteil der elektrischen Maschine, zum Beispiel dem Gehäusedeckel beziehungsweise dem Lagerschild, unterschritten wird. Das kann einen unerwünschten Leckstrom bewirken, beispielsweise einen Kriechstrom.

Viertens kann die Tropfnase beim Betrieb der elektrischen Maschine abbrechen und einen Schaden im Inneren der elektrischen Maschine verursachen.

Um die oben genannten Probleme zu vermeiden, werden an einem Stator gebildete Tropfnasen üblicherweise vor dem Montieren des Stators in das Gehäuse einer elektrischen Maschine entfernt. Dazu können die Tropfnasen manuell entfernt werden, zum Beispiel durch Abbrechen oder Abschneiden. Das ist allerdings aufwendig und erhöht die Herstellungskosten der elektrischen Maschine.

Alternativ dazu können an dem Stator gebildete Tropfen bereits vor dem Aushärten mittels Druckluft entfernt werden. Das kann allerdings zu einer unerwünschten Verteilung der Imprägnierflüssigkeit auf beziehungsweise in dem Stator führen, wodurch der Stator unbrauchbar wird, was die Herstellungskosten ebenfalls erhöht.

Die Aufgabe der Erfindung besteht darin, das Bilden von Tropfnasen aus einer Imprägnierflüssigkeit an einem Stator einer elektrischen Maschine besonders kostengünstig zu vermeiden.

Die Aufgabe wird mit einem Verfahren zum Imprägnieren eines Stators einer elektrischen Maschine gemäß der Erfindung gelöst, bei dem
- der Stator mit einer ersten Menge Imprägnierflüssigkeit bedeckt wird,
- eine zweite Menge Imprägnierflüssigkeit unter dem Stator angeordnet wird, so dass ein unteres Ende des Stators eine Oberflächenschicht der zweiten Menge Imprägnierflüssigkeit berührt, und
- die Oberflächenschicht der zweiten Menge Imprägnierflüssigkeit horizontal in Bezug auf das untere Ende des Stators bewegt wird, während das untere Ende des Stators die Oberflächenschicht der zweiten Menge Imprägnierflüssigkeit berührt und die erste Menge Imprägnierflüssigkeit, die den Stator bedeckt, ausgehärtet wird.

Die Lösung beruht auf der Idee, das Bilden der Tropfen zu vermeiden, indem das untere Ende des Stators, an dem die Tropfen ansonsten entstünden, von Imprägnierflüssigkeit umspült wird. Dadurch wird vom Stator heruntergeflossene Imprägnierflüssigkeit weggespült, so dass sich die Imprägnierflüssigkeit nicht in Form von Tropfen sammeln kann. Die Imprägnierflüssigkeit geht stattdessen in der zweiten Menge Imprägnierflüssigkeit auf, wird also zu deren Bestandteil.

Bei der das untere Ende des Stators umspülenden Oberflächenschicht kann es sich um eine flache Schicht der zweiten Menge Imprägnierflüssigkeit handeln, die sich von einer Oberfläche beziehungsweise einem Flüssigkeitsspiegel der zweiten Menge Imprägnierflüssigkeit nach unten erstreckt. Die vertikale Ausdehnung der Oberflächenschicht beträgt zum Beispiel 1 Millimeter, 5 Millimeter, 1 Zentimeter oder 1,5 Zentimeter.

Die Imprägnierflüssigkeit kann ein Harz, einen Härter und/oder andere Bestandteile aufweisen, welche den Übergang von dem flüssigen Zustand in den festen Zustand ermöglichen. Weiterhin muss sich die aus der Imprägnierflüssigkeit entstehende Imprägnierung durch geeignete mechanische und elektrische Eigenschaften auszeichnen.

Das Bewegen der Oberflächenschicht der zweiten Menge Imprägnierflüssigkeit kann solange fortgesetzt werden, bis die erste Menge Imprägnierflüssigkeit ausgehärtet ist oder zumindest einen Zustand erreicht hat, indem die erste Menge Imprägnierflüssigkeit nicht mehr von dem Stator herabfließen kann, zum Beispiel einen gelförmigen Zustand.

Bei der elektrischen Maschine kann es sich unter anderem um einen Elektromotor oder einen Generator handeln. Die elektrische Maschine kann zum Beispiel in einem Fahrzeug eingesetzt werden, insbesondere in einem Landfahrzeug, Wasserfahrzeug oder Luftfahrzeug. Anstelle des Stators kann das Verfahren auch mit einem anderen Bestandteil einer elektrischen Maschine ausgeführt werden, welches einen Wickelkörper aufweist, zum Beispiel mit einem Rotor.

Bei einer Ausführungsform des erfindungsgemäßen Verfahrens wird der Stator mit der ersten Menge Imprägnierflüssigkeit bedeckt, indem der Stator in Imprägnierflüssigkeit eingetaucht wird, die in einem Tank angeordnet ist. Somit wird der Stator in eine größere Menge (beziehungsweise ein größeres Volumen) Imprägnierflüssigkeit eingetaucht, in der die erste Menge Imprägnierflüssigkeit enthalten ist. Damit kann ein vollständiges Bedecken des Stators sichergestellt werden.

Bei einer weiteren Ausführungsform des erfindungsgemäßen Verfahrens wird der Stator mit der ersten Menge Imprägnierflüssigkeit bedeckt, indem der Stator in einem Tank angeordnet wird und der Tank mit Imprägnierflüssigkeit geflutet wird. Auch damit kann ein vollständiges Bedecken des Stators sichergestellt werden.

Bei einer weiteren Ausführungsform des erfindungsgemäßen Verfahrens wird eine Seitenwand des Tanks von einem Statorgehäuse gebildet, in dem der Stator beim Betrieb der elektrischen Maschine verbleibt. Dadurch wird kein separater Tank benötigt und die erforderliche Menge Imprägnierflüssigkeit kann reduziert werden.

Wird ein Tank verwendet, kann bei einer weiteren Ausführungsform des erfindungsgemäßen Verfahrens die zweite Menge an Imprägnierflüssigkeit unterhalb des Stators angeordnet werden, indem der Tank von Imprägnierflüssigkeit entleert wird, bis eine Oberfläche der Imprägnierflüssigkeit das untere Ende des Stators erreicht. Das heißt, die Oberfläche beziehungsweise der Flüssigkeitsspiegel der Imprägnierflüssigkeit wird solange abgesenkt, bis die gewünschte Höhe am unteren Ende des Stators erreicht ist.

Auf diese Weise lässt sich das Anordnen der Imprägnierflüssigkeit unterhalb des Stators besonders schnell durchführen. Ein weiterer Vorteil der Methode besteht darin, dass ein Teil der Imprägnierflüssigkeit zweifach verwendet wird, nämlich sowohl beim Bedecken des Stators als auch zum Vermeiden des Bildens von Tropfnasen.

Alternativ dazu kann die zweite Menge an Imprägnierflüssigkeit unterhalb des Stators angeordnet werden, indem nach dem vollständigen Entleeren des Tanks von Imprägnierflüssigkeit erneut Imprägnierflüssigkeit in den Tank gefüllt wird, bis eine Oberfläche der Imprägnierflüssigkeit das untere Ende des Stators erreicht. Das heißt, die Oberfläche beziehungsweise der Flüssigkeitsspiegel der Imprägnierflüssigkeit wird solange erhöht, bis die gewünschte Höhe erreicht ist.

Vorteilhaft wird das Entleeren des Tanks erst dann durchgeführt, wenn die erste Menge Imprägnierflüssigkeit, welche am Stator verbleiben soll, einen etwas festeren Zustand erreicht hat, zum Beispiel einen gelartigen Zustand. Dieser lässt sich unter anderem durch Erwärmen des Stators erreichen.

Alternativ zum Verwende eines Tanks kann der Stator mit der ersten Menge Imprägnierflüssigkeit bedeckt werden, indem die erste Menge Imprägnierflüssigkeit auf den Stator beziehungsweise die Wicklungen des Stators aufgeträufelt wird.

Bei einer weiteren Ausführungsform des erfindungsgemäßen Verfahrens wird der Stator so angeordnet, dass eine virtuelle beziehungsweise gedachte Achse des Stators vertikal ausgerichtet ist. Dadurch lässt sich der Stator besonders gut in einem Tank anordnen, der als auf seiner Stirnfläche stehender Zylinder ausgebildet ist.

Bei einer weiteren Ausführungsform des erfindungsgemäßen Verfahrens berührt das untere Ende des Stators die Oberflächenschicht der zweiten Menge Imprägnierflüssigkeit, indem ein Wickelkopf des Stators in die Oberflächenschicht der zweiten Menge Imprägnierflüssigkeit getaucht wird.

Bei einer weiteren Ausführungsform des erfindungsgemäßen Verfahrens berührt das untere Ende des Stators die Oberflächenschicht der zweiten Menge Imprägnierflüssigkeit, indem das untere Ende des Stators 1 mm, 2 mm, 3 mm, 4 mm oder 5 mm tief in die zweite Menge Imprägnierflüssigkeit getaucht wird.

Bei einer weiteren Ausführungsform des erfindungsgemäßen Verfahrens wird die Oberflächenschicht der zweiten Menge Imprägnierflüssigkeit horizontal in Bezug auf das untere Ende des Stators bewegt, indem die zweite Menge Imprägnierflüssigkeit unter Verwendung einer Pumpe, beispielsweise einer Membranpumpe, zirkuliert beziehungsweise umgewälzt wird. Mit einer automatischen Pumpe lässt sich das Zirkulieren automatisieren.

Alternativ dazu kann die Oberflächenschicht in Bezug auf das untere Ende des Stators bewegt werden, indem die zweite Menge Imprägnierflüssigkeit in eine horizontale Rotation versetzt wird, zum Beispiel mit einem Rührwerk.

Bei einer weiteren Ausführungsform des erfindungsgemäßen Verfahrens wird die erste Menge Imprägnierflüssigkeit, die den Stator bedeckt, durch Verwendung einer Heizung vorgehärtet, bevor die zweite Menge Imprägnierflüssigkeit unter dem Stator angeordnet wird. Das bewirkt den Übergang der ersten Menge Imprägnierflüssigkeit vom flüssigen Zustand in einen gelartigen Zustand, so dass ein übermäßiges Herabfließen der ersten Menge Imprägnierflüssigkeit vermieden wird. Die hierfür verwendete Temperatur kann unter anderem zwischen 80 °C und 120 °C liegen.

Die Aufgabe wird ferner mit einer Vorrichtung zum Imprägnieren eines Stators einer elektrischen Maschine gemäß der Erfindung gelöst, die folgende Bestandteile aufweist:
- einen Tank zum Bedecken des Stators mit einer ersten Menge Imprägnierflüssigkeit und Anordnen einer zweiten Menge Imprägnierflüssigkeit unter dem Stator, so dass ein unteres Ende des Stators eine Oberflächenschicht der zweiten Menge Imprägnierflüssigkeit berührt, und
- eine Bewegungseinrichtung zum Bewegen der Oberflächenschicht der zweiten Menge Imprägnierflüssigkeit horizontal in Bezug auf das untere Ende des Stators, während das untere Ende des Stators die Oberflächenschicht der zweiten Menge Imprägnierflüssigkeit berührt und die erste Menge Imprägnierflüssigkeit, die den Stator bedeckt, ausgehärtet wird.

Der Tank kann zum Bedecken des Stators eine größere Menge Imprägnierflüssigkeit aufnehmen, in welcher die zum Verbleib am Stator bestimmte erste Menge Imprägnierflüssigkeit enthalten ist. Außerdem kann die zweite Menge Imprägnierflüssigkeit am Boden des Tanks in geeigneter Weise unter dem Stator positioniert werden.

Das Bewegen der zweiten Menge Imprägnierflüssigkeit mittels der Bewegungseinrichtung bewirkt, dass das unteres Ende des Stators von Imprägnierflüssigkeit umspült wird. Dadurch wird vom Stator heruntergeflossene Imprägnierflüssigkeit weggespült, so dass sich die Imprägnierflüssigkeit nicht in Form von Tropfen am unteren Ende des Stators sammeln kann. Stattdessen kann die Imprägnierflüssigkeit in der zweiten Menge Imprägnierflüssigkeit aufgehen und damit zum Bestandteil der zweiten Menge Imprägnierflüssigkeit werden.

Die Bewegungseinrichtung weist beispielsweise einen Zulauf zum Zuführen von Imprägnierflüssigkeit und/oder einen Ablauf zum Abführen von Imprägnierflüssigkeit auf. Der Zulauf und der Ablauf können jeweils mit einem Ventil ausgestattet sein, mit dem die im Tank befindliche Menge Imprägnierflüssigkeit einstellbar ist.

Der Zulauf kann eine Zulauföffnung aufweisen und der Ablauf kann eine Ablauföffnung aufweisen. Die Zulauföffnung und/oder die Ablauföffnung lassen sich jeweils im Boden beziehungsweise am Boden des Tanks anordnen. Das Anordnen der Zulauföffnung im Boden ist insbesondere dann vorteilhaft, wenn die Seitenwand des Tanks von einem Statorgehäuse gebildet wird. Das Anordnen der Ablauföffnung im Boden begünstigt das Ablaufen von Imprägnierflüssigkeit aus dem Tank mit Hilfe der Schwerkraft.

Die Zulauföffnung kann insbesondere am Rand des Bodens, also an der Seitenwand des Tanks, angeordnet sein, wobei die Ablauföffnung in oder an der Mitte des Bodens angeordnet ist. Umgekehrt kann die Zulauföffnung in der Mitte des Bodens angeordnet sein, wobei die Ablauföffnung am Rand des Bodens angeordnet ist. Alternativ zum Anordnen im Boden können die Zulauföffnung und/oder die Ablauföffnung auch in einer Seitenwand des Tanks angeordnet sein. Vorteilhaft ist es, wenn jede der Zulauföffnungen einen vorgegebenen Mindestabstand von jeder der Ablauföffnungen entfernt ist.

Anstelle nur einer Zulauföffnung können mehrere Zulauföffnungen vorgesehen sein, zum Beispiel mehrere am Rand des Bodens angeordnete Zulauföffnungen. Analog dazu können anstelle nur einer Ablauföffnung mehrere Ablauföffnungen vorgesehen sein, zum Beispiel mehrere an der Mitte des Bodens angeordnete Ablauföffnungen.

Wird dem Tank über den Zulauf Imprägnierflüssigkeit zugeführt, während gleichzeitig über den Ablauf Imprägnierflüssigkeit aus dem Tank abgeführt wird, strömt Imprägnierflüssigkeit durch den Tank, genauer gesagt über dessen Boden. Dadurch kann eine Oberflächenschicht der in dem Tank befindlichen Imprägnierflüssigkeit, beispielsweise der zweiten Menge Imprägnierflüssigkeit, horizontal bewegt werden.

Die Menge der dem Tank pro Zeiteinheit zugeführte Imprägnierflüssigkeit kann der Menge der aus dem Tank pro Zeiteinheit abgeführten Imprägnierflüssigkeit entsprechen, so dass die Menge der am Boden des Tanks befindlichen Imprägnierflüssigkeit, welche der zweiten Menge Imprägnierflüssigkeit entspricht, konstant bleibt.

Um die Bewegung eine längere Zeit aufrechtzuerhalten, kann die Bewegungseinrichtung weiterhin eine Zirkulationseinheit aufweisen, mit der über den Ablauf aus dem Tank abgeführte Imprägnierflüssigkeit über den Zulauf dem Tank wieder zugeführt wird. Die Zirkulationseinheit kann hierfür mit einer Pumpe ausgestattet sein, die mittels Leitungen mit dem Zulauf und dem Ablauf verbunden ist. Damit ist ein Imprägnierflüssigkeitskreislauf gebildet, in dem Imprägnierflüssigkeit zirkuliert, das heißt umgewälzt wird.

Die Zirkulation lässt sich automatisieren, indem die Pumpe von einem Motor angetrieben wird. Durch Einstellen einer Förderrate der Pumpe lässt sich die die Menge der dem Tank pro Zeiteinheit zugeführten Imprägnierflüssigkeit und damit die Menge der am Boden des Tanks befindlichen Imprägnierflüssigkeit einstellen.

Alternativ dazu oder zusätzlich kann die Bewegungseinrichtung ein Rührwerk aufweisen, mit dem die zweite Menge Imprägnierflüssigkeit in horizontale Rotation versetzt wird, um die Oberflächenschicht der zweiten Menge Imprägnierflüssigkeit horizontal zu bewegen.

Neben dem Tank und der Bewegungseinrichtung kann die erfindungsgemäße Vorrichtung weitere Bestandteile aufweisen, zum Beispiel eine Heizeinrichtung zum Erwärmen von Imprägnierflüssigkeit, so dass diese aushärtet.

Bei einer Ausführungsform der erfindungsgemäßen Vorrichtung weist die Vorrichtung eine Imprägnierflüssigkeitsbarriere auf, die sich von einem Boden des Tanks bis zu der Oberflächenschicht der zweiten Menge Imprägnierflüssigkeit erstreckt und ein erstes Reservoir des Tanks, das die zweite Menge Imprägnierflüssigkeit aufnimmt, von einem zweiten Reservoir des Tanks trennt.

Als Material der Imprägnierflüssigkeitsbarriere lässt sich ein Kunststoff verwenden, insbesondere ein elastischer Kunststoff. Die Imprägnierflüssigkeitsbarriere kann unter anderem in Form eines Bandes ausgebildet sein, das auf dem Boden des Tanks liegt. Der Querschnitt des Bandes kann zum Beispiel rechteckförmig, dreieckförmig oder kreisförmig sein. Es ist möglich, dass beide Stirnflächen des Bandes jeweils an einer Seitenwand des Tanks anliegen. Alternativ dazu kann die Imprägnierflüssigkeitsbarriere in Form eines Ringes ausgebildet sein, der auf dem Boden liegt.

Mit der Imprägnierflüssigkeitsbarriere lässt sich die vertikale Position der Oberflächenschicht der zweiten Menge Imprägnierflüssigkeit besonders gut einstellen und konstant halten. Dazu wird die Höhe der Imprägnierflüssigkeitsbarriere so gewählt, dass ihr oberen Ende in der gewünschten Höhe des Flüssigkeitsspiegels der zweiten Menge Imprägnierflüssigkeit liegt. Damit reicht die Imprägnierflüssigkeitsbarriere bis zum unteren Ende des Stators.

Wird nun Imprägnierflüssigkeit in das erste Reservoir eingefüllt, kann deren Flüssigkeitsspiegel zunächst nur bis zu der gewünschten Höhe ansteigen. Denn beim Einfüllen weiterer Imprägnierflüssigkeit in das erste Reservoir läuft überschüssige Imprägnierflüssigkeit über die Imprägnierflüssigkeitsbarriere in das zweite Reservoir hinein, so dass die Höhe des Flüssigkeitsspiegels im ersten Reservoir konstant bleibt. Folglich bildet die Imprägnierflüssigkeitsbarriere einen Überlauf des ersten Reservoirs.

Bei einer weiteren Ausführungsform der erfindungsgemäßen Vorrichtung weist das erste Reservoir des Tanks eine Zulauföffnung zum Zuführen von Imprägnierflüssigkeit in den Tank auf und/oder das zweite Reservoir des Tanks weist eine Ablauföffnung zum Ablaufen beziehungsweise Abführen von Imprägnierflüssigkeit aus dem Tank auf.

Wird dem ersten Reservoir Imprägnierflüssigkeit zugeführt, beispielsweise über die Zulauföffnung, während gleichzeitig Imprägnierflüssigkeit über die Imprägnierflüssigkeitsbarriere läuft, kommt es zu der erwünschten horizontalen Bewegung der Oberflächenschicht der zweiten Menge Imprägnierflüssigkeit in Richtung des Überlaufs. Gleichzeitig kann Imprägnierflüssigkeit aus dem zweiten Reservoir abgeführt werden, beispielsweise über die Ablauföffnung.

Um die Bewegung über einen längeren Zeitraum aufrechtzuerhalten, kann über den Ablauf aus dem Tank abgeführte Imprägnierflüssigkeit über den Zulauf dem Tank wieder zugeführt wird. Dazu lässt sich unter anderem die oben erwähnte Zirkulationseinheit einsetzen. In diesem Fall bilden das erste Reservoir, das zweite Reservoir und die Zirkulationseinheit einen Imprägnierflüssigkeitskreislauf.

Die Bewegung kann solange aufrechterhalten werden, bis die erste Menge Imprägnierflüssigkeit ausgehärtet ist oder zumindest einen Zustand erreicht hat, in dem die erste Menge Imprägnierflüssigkeit nicht mehr vom Stator herabfließen kann, zum Beispiel einen gelartigen Zustand.

Bei einer weiteren Ausführungsform der erfindungsgemäßen Vorrichtung umgibt das erste Reservoir des Tanks das zweite Reservoir des Tanks. Dazu kann die Imprägnierflüssigkeitsbarriere das zweite Reservoir umgeben, wobei das erste Reservoir die Imprägnierflüssigkeitsbarriere umgibt und von einer Seitenwand des Tanks äußerlich begrenzt wird. Das heißt, das zweite Reservoir befindet sich innerhalb der Imprägnierflüssigkeitsbarriere und das erste Reservoir befindet sich zwischen der Imprägnierflüssigkeitsbarriere und der Seitenwand.

In diesem Fall können am Rand des Bodens, also im ersten Reservoir, eine oder mehrere Zulauföffnungen für Imprägnierflüssigkeit vorgesehen sein, wobei im zweiten Reservoir eine oder mehrere Ablauföffnungen für Imprägnierflüssigkeit vorgesehen sein können.

Eine weitere Ausführungsform der erfindungsgemäßen Vorrichtung ist derart eingerichtet, dass das untere Ende des Stators Imprägnierflüssigkeit berührt, die gerade über die Imprägnierflüssigkeitsbarriere fließt. Damit berührt der Stator einen Bereich der Oberflächenschicht der zweiten Menge Imprägnierflüssigkeit, der vergleichsweise schnell bewegt wird, wodurch das Bilden unerwünschter Imprägnierflüssigkeitstropfen besonders effektiv vermieden wird.

Im Folgenden wird die Erfindung anhand von Figuren näher erläutert.
- Figur 1: zeigt eine schematische Schnittdarstellung einer Vorrichtung zum Imprägnieren eines Stators einer elektrischen Maschine gemäß einer Ausführungsform der Erfindung.
- Figur 2: zeigt eine schematische Schnittdarstellung einer Vorrichtung zum Imprägnieren eines Stators einer elektrischen Maschine gemäß einer anderen Ausführungsform der Erfindung.
- Figur 3: zeigt eine perspektivische Schnittdarstellung einer Vorrichtung zum Imprägnieren eines Stators einer elektrischen Maschine gemäß einer weiteren Ausführungsform der Erfindung.
- Figur 4: zeigt ein Ablaufdiagramm eines Verfahrens zum Imprägnieren eines Stators einer elektrischen Maschine gemäß einer Ausführungsform der Erfindung.

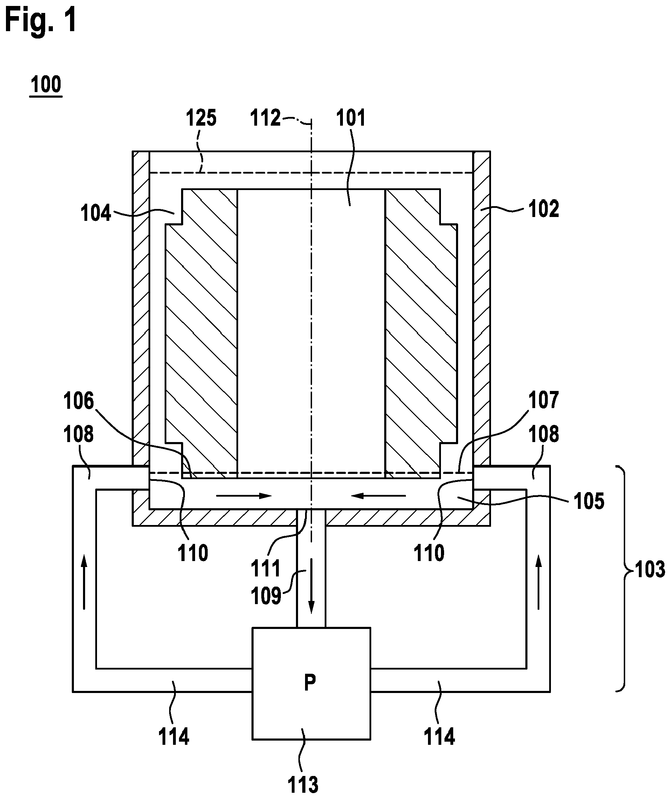

**Figur 1** zeigt eine schematische Schnittdarstellung einer Vorrichtung 100 zum Imprägnieren eines Stators 101 einer elektrischen Maschine gemäß einer Ausführungsform der Erfindung.

Die Vorrichtung 100 weist einen Tank 102, eine Bewegungseinrichtung 103 und eine Heizeinrichtung (nicht gezeigt) auf. Zusätzlich kann die Vorrichtung 100 weitere Bestandteile aufweisen, die in Figur 1 nicht gezeigt sind. Die Pfeile kennzeichnen durch die Vorrichtung 100 strömende Imprägnierflüssigkeit.

Der Tank 102 hat die Form eines nach oben offenen Zylinders und verfügt über einen Boden und eine geschlossene Seitenwand, die sich von dem Boden nach oben erstreckt. Alternativ dazu kann der Tank auch eine andere Form haben, beispielsweise eine Quaderform. Der Tank 102 dient insbesondere als Behälter beziehungsweise Becken zum Aufnehmen des Stators 101 und von Imprägnierflüssigkeit.

Eine erste Funktion des Tanks 102 besteht darin, den Stator 101 mit einer ersten Menge Imprägnierflüssigkeit 104 zu bedecken, die nach dem Entfernen des Stators 101 aus dem Tank 102 an dem Stator 101 verbleiben soll. Dazu kann der Tank 102 so viel Imprägnierflüssigkeit aufnehmen, dass deren Flüssigkeitsspiegel 125 oberhalb des Stators 101 steht. Damit ist sichergestellt, dass der Stator 101 vollständig mit der ersten Menge Imprägnierflüssigkeit 104 bedeckt ist, die zu der vom Tank 102 aufgenommenen Imprägnierflüssigkeit gehört.

Eine zweite Funktion des Tanks 102 besteht darin, eine zweite Menge Imprägnierflüssigkeit 105 so unter dem Stator 101 anzuordnen, dass ein unteres Ende 106 des Stators 101 eine Oberflächenschicht 107 der zweiten Menge Imprägnierflüssigkeit 105 berührt.

Die Bewegungseinrichtung 103 weist einen Zulauf 108 zum Zuführen von Imprägnierflüssigkeit in den Tank 102 und einen Ablauf 109 zum Abführen von Imprägnierflüssigkeit aus dem Tank 102 auf. Der Zulauf 108 und der Ablauf 109 sind jeweils mit einem Ventil (nicht gezeigt) ausgestattet, mit dem die zugeführte beziehungsweise abgeführte Menge Imprägnierflüssigkeit einstellbar ist. Es ist aber auch möglich, auf eines oder beide der Ventile zu verzichten.

Der Zulauf 108 hat mehrere Zulauföffnungen 110, die in der Seitenwand des Tanks 102 angeordnet sind. Alternativ dazu können die Zulauföffnungen im Boden des Tanks angeordnet sein. Der Ablauf 109 hat eine Ablauföffnung 111, die im Boden des Tanks 102 angeordnet ist. Alternativ dazu kann die Ablauföffnung in der Seitenwand angeordnet sein. Anstelle nur einer Ablauföffnung 111 können auch mehrere Ablauföffnungen vorgesehen sein.

Weiterhin ist die Bewegungseinrichtung 103 mit einer Zirkulationseinheit ausgestattet, mit der über den Ablauf 109 aus dem Tank 102 abgeführte Imprägnierflüssigkeit über den Zulauf 108 dem Tank 102 wieder zuführbar ist. Hierfür besitzt die Zirkulationseinheit eine Pumpe 113 mit einem Motor, welche über Leitungen 114 mit dem Zulauf 108 und dem Ablauf 109 verbunden ist. Damit ist ein automatisierter Imprägnierflüssigkeitskreislauf gebildet, in dem Imprägnierflüssigkeit zirkulieren kann.

Eine Funktion der der Bewegungseinrichtung 103 besteht darin, die Oberflächenschicht 107 der zweiten Menge Imprägnierflüssigkeit 105 horizontal in Bezug auf das untere Ende 106 des Stators 101 zu bewegen, während das untere Ende 106 des Stators 101 die Oberflächenschicht 107 der berührt und die erste Menge Imprägnierflüssigkeit 104, die den Stator 101 bedeckt, ausgehärtet wird.

Die Heizeinrichtung ist zum Erwärmen des Stators 101 beziehungsweise der den Stator 101 bedeckenden ersten Menge Imprägnierflüssigkeit 104 vorgesehen. Auf die Heizeinrichtung kann aber auch verzichtet werden.

Der Stator 101 umfasst neben einem Statorkern (nicht gezeigt) mehrere Statorwicklungen (nicht gezeigt), die an dem Statorkern angebracht sind. Der Stator 101 ist so in dem Tank 102 angeordnet, dass eine virtuelle Achse 112 des Stators 101 vertikal ausgerichtet ist. Die Achse 112 des Stators 101 liegt vorzugsweise auf einer virtuellen Achse des Tanks 102, so dass der Stator 101 und der Tank 102 konzentrisch zueinander ausgerichtet sind.

Weiterhin ist der Stator 101 derart in dem Tank 102 positioniert, dass sein unteres Ende 106 vom Boden des Tanks 102 beabstandet ist, zum Beispiel 1 , 2, 3, 4 oder 5 Zentimeter. In dieser Position wird der Stator 101 von einer Halteeinrichtung (nicht gezeigt) gehalten. An einem unteren Ende 106 des Stators 102 befinden sich mehrere Wickelköpfe (nicht gezeigt) der Statorwicklungen.

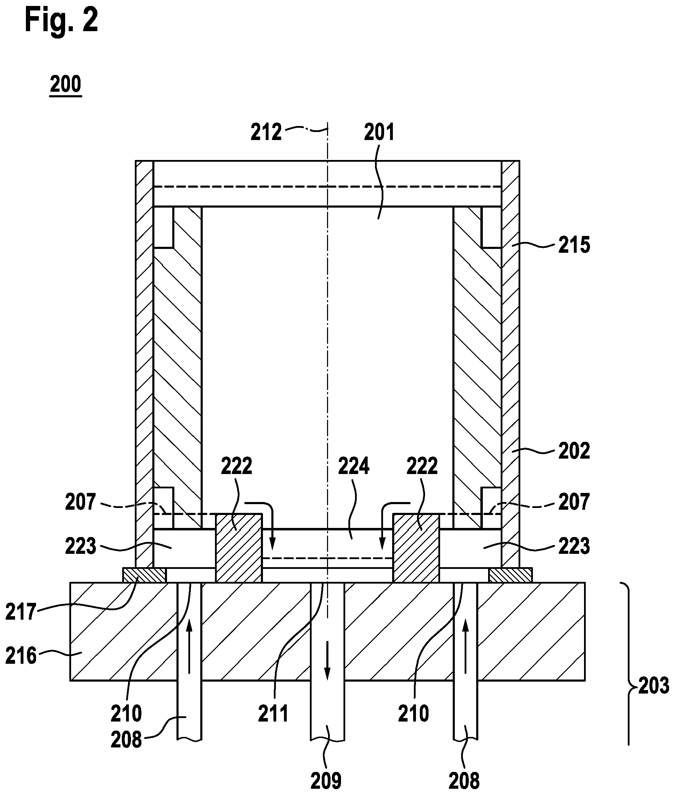

**Figur 2** zeigt eine schematische Schnittdarstellung einer Vorrichtung 200 zum Imprägnieren eines Stators 201 einer elektrischen Maschine gemäß einer anderen Ausführungsform der Erfindung.

Der Stator 201 entspricht dem in Figur 1 dargestellten Stator 101 - abgesehen von folgendem Unterschied: Der in Figur 2 gezeigte Stator ist in einem Statorgehäuse 215 befestigt, womit die oben genannte Halterung entfallen kann. Das Statorgehäuse 215 hat die Form eines Zylinders mit offenen Stirnseiten.

Die Vorrichtung 200 weist einen Tank 202, eine Bewegungseinrichtung 203 (teilweise gezeigt) und eine Heizeinrichtung (nicht gezeigt) auf. Zusätzlich kann die Vorrichtung 200 weitere Bestandteile aufweisen, die in Figur 2 nicht dargestellt sind. Die Pfeile kennzeichnen durch die Vorrichtung 200 strömende Imprägnierflüssigkeit.

Die Funktionen des Tanks 202, der Bewegungseinrichtung 203 und der Heizung entsprechen den Funktionen des Tanks 102, der Bewegungseinrichtung 203 und der Heizung, die Bezug nehmend auf Figur 1 beschrieben wurden.

Der Tank 202 ist wie folgt gebildet: Als Seitenwand des Tanks 202 dient das Statorgehäuse 215. Als Boden des Tanks 202 dient eine Bodenplatte 216, auf welcher das Statorgehäuse 215 steht. Zum Tank 202 gehört außerdem eine ringförmige Dichtung 217, die zwischen dem Statorgehäuse 215 und der Bodenplatte 216 eingeklemmt ist.

Die Bewegungseinrichtung 203 weist einen Zulauf 208 zum Zuführen von Imprägnierflüssigkeit in den Tank 202 und einen Ablauf 209 zum Abführen von Imprägnierflüssigkeit aus dem Tank 202 auf. Der Zulauf 208 und der Ablauf 209 sind jeweils mit einem Ventil (nicht gezeigt) ausgestattet, mit dem die zugeführte beziehungsweise abgeführte Menge Imprägnierflüssigkeit einstellbar ist. Es ist aber auch möglich, auf eines oder beide der Ventile zu verzichten.

Der Zulauf 208 verfügt über zwei Zulauföffnungen 210, die in der Bodenplatte 216 an der Dichtung 217 angeordnet sind. Optional kann auch eine größere Anzahl Zulauföffnungen vorgesehen sein, zum Beispiel 10, 20, 30, 40, 50 oder 60 Zulauföffnungen. Der Ablauf 209 hat eine Ablauföffnung 211, die in der Bodenplatte 216 angeordnet ist, wobei eine virtuelle Achse 212 des Stators 201 durch die Ablauföffnung 211 verläuft. Anstelle nur einer Ablauföffnung 211 können auch mehrere an der Achse 212 angeordnete Ablauföffnungen vorgesehen sein. Die Zulauföffnungen und die Ablauföffnungen können auch auf andere Weise im Boden des Tanks angeordnet sein.

Weiterhin ist die Bewegungseinrichtung 203 mit einer Zirkulationseinheit (nicht gezeigt) ausgestattet, die der in Figur 1 dargestellten Zirkulationseinheit entspricht. Mit der Zirkulationseinheit kann über den Ablauf 209 aus dem Tank 202 abgeführte Imprägnierflüssigkeit über den Zulauf 208 dem Tank 202 wieder zugeführt werden.

Als Besonderheit weist die Vorrichtung 200 eine Imprägnierflüssigkeitsbarriere 222 auf, die sich vom Boden des Tanks 202 bis zur Oberflächenschicht 207 einer zweiten Menge Imprägnierflüssigkeit 204 erstreckt und ein erstes Reservoir 223, das die zweite Menge Imprägnierflüssigkeit 204 aufnimmt, von einem zweiten Reservoir 224 trennt. Die Imprägnierflüssigkeitsbarriere 222 umgibt die Ablauföffnung 211 ringförmig, so das erste Reservoir 223 das zweite Reservoir umgibt. Die Zulauföffnungen 210 befinden sich außerhalb der Imprägnierflüssigkeitsbarriere 222 im ersten Reservoir 223.

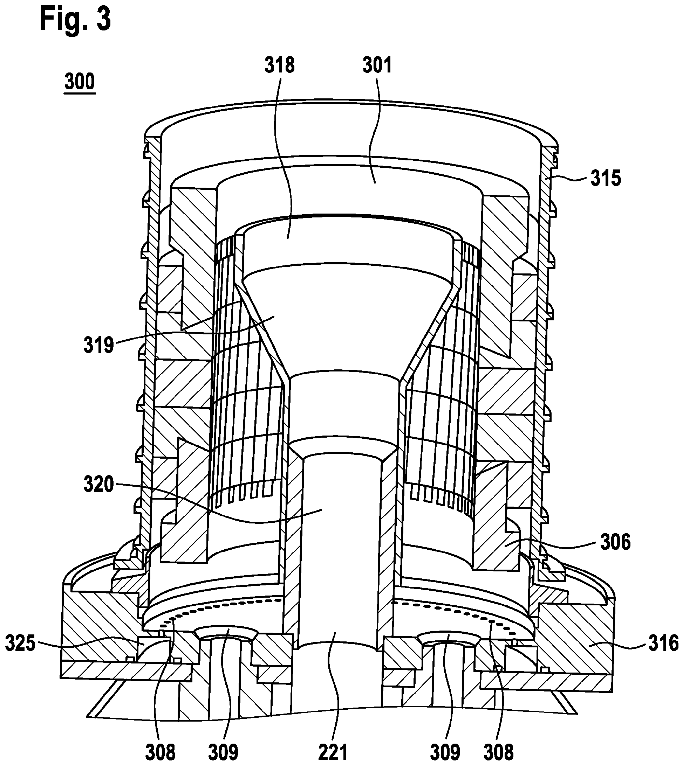

**Figur 3** zeigt eine perspektivische Schnittdarstellung einer Vorrichtung 300 zum Imprägnieren eines Stators 301 einer elektrischen Maschine gemäß einer anderen Ausführungsform der Erfindung.

Der Stator 301 entspricht dem in Figur 2 dargestellten Stator 201 und ist ebenso wie dieser in einem Statorgehäuse 315 befestigt, welches die Form eines Zylinders mit offenen Stirnseiten hat.

Die Vorrichtung 300 entspricht der in Figur 2 gezeigten Vorrichtung 200 - abgesehen von folgenden Unterschieden:
Die Vorrichtung 300 ist mit einer im Inneren des Stators 301 angeordneten Überlaufeinrichtung 318 ausgestattet, die einen Überlauftrichter 319, ein Überlaufrohr 320 und eine Überlauföffnung 221 aufweist, die in der Bodenplatte 316 angeordnet ist. Der Überlauftrichter 319 ist über das Überlaufrohr 320 gestülpt. Der Durchmesser des Überlauftrichters 319 ist kleiner als der Innendurchmesser des Stators 301, so dass der Überlauftrichter 319 von dem Stator 301 beabstandet ist, insbesondere am oberen Rand des Überlauftrichters 319. Das Überlaufrohr 320 erstreckt sich von der Überlauföffnung 321 bis in den Überlauftrichter 319 hinein, der das obere Ende des Überlaufrohres 320 umschließt. Eine Funktion der Überlaufeinrichtung 318 besteht darin, überschüssige Imprägnierflüssigkeit aus dem Tank 302 abzuführen.
Die Bewegungseinrichtung der Vorrichtung 300 besitzt unter anderem eine Vielzahl von Zulauföffnungen 308, die in einer kreisförmigen Vertiefung der Bodenplatte 316 angeordnet und über einen Kanal 325 miteinander verbunden sind, der unter den Zulauföffnungen 308 ringförmig unter der Oberfläche der Bodenplatte 316 verläuft.

Ferner hat die Bewegungseinrichtung zwei Ablauföffnungen 309, die in der Vertiefung der Bodenplatte 316 jeweils zwischen einer der Zulauföffnungen 308 der Vorrichtung 300 und dem Überlaufrohr 320 angeordnet sind.

Im Gegensatz zu der Vorrichtung 200 aus Figur 2 weist die Vorrichtung 300 keine Imprägnierflüssigkeitsbarriere auf.

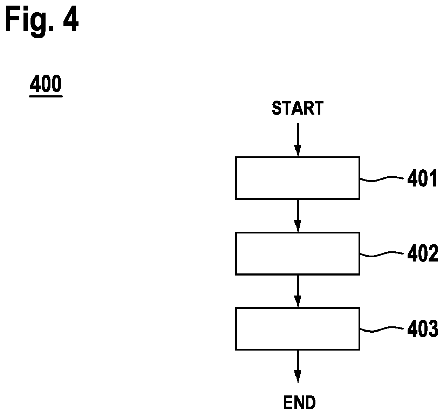

**Figur 4** zeigt ein Ablaufdiagramm eines Verfahrens 400 zum Imprägnieren eines Stators einer elektrischen Maschine gemäß einer Ausführungsform der Erfindung.

Das Verfahren 400 wird mit der Vorrichtung 300 und Stator ausgeführt, die in Figur 3 gezeigt sind.

Nach dem Start des Verfahrens wird bei einem ersten Verfahrensschritt 410 der Stator 301 mit einer ersten Menge Imprägnierflüssigkeit bedeckt. Dazu wird durch den Kanal 322 und die Zulauföffnungen 308 Imprägnierflüssigkeit in den Tank 302 der Vorrichtung 300 gepumpt, bis der Stator 301 vollständig mit Imprägnierflüssigkeit bedeckt ist. Das heißt, der Tank 302 wird mit Imprägnierflüssigkeit geflutet. Hierfür kann unter anderem die Pumpe der Bewegungseinrichtung der Vorrichtung 300 eingesetzt werden.

Ferner wird der Stator 301 mit der Heizeinrichtung der Vorrichtung 300 erwärmt, so dass die zum Verbleib an dem Stator 301 vorgesehene erste Menge Imprägnierflüssigkeit vom flüssigen Zustand in einen gelförmigen Zustand übergeht.

Bei einem zweiten Verfahrensschritt 420 wird eine zweite Menge Imprägnierflüssigkeit unter dem Stator 301 angeordnet, so dass das untere Ende 306 des Stators 301 eine Oberflächenschicht der zweiten Menge Imprägnierflüssigkeit berührt.

Dazu wird Imprägnierflüssigkeit aus dem Tank 302 durch die Ablauföffnungen 309 abgelassen, bis der Flüssigkeitsspiegel der Imprägnierflüssigkeit das untere Ende 306 des Stators 302 erreicht hat. Die dann am Boden des Tanks 302 verbleibende Imprägnierflüssigkeit entspricht der zweiten Menge Imprägnierflüssigkeit. Im vorliegenden Fall befindet sich an dem unteren Ende 306 mehrere Wickelköpfe von Wicklungen des Stators 301. Das untere Ende 306 berührt die Oberflächenschicht, indem jeder der Wickelköpfe in die zweite Menge Imprägnierflüssigkeit eingetaucht ist.

Alternativ dazu kann die zweite Menge an Imprägnierflüssigkeit unterhalb des Stators 301 angeordnet werden, indem nach dem vollständigen Entleeren des Tanks 302 erneut Imprägnierflüssigkeit in den Tank 302 gepumpt wird, bis deren Flüssigkeitsspiegel das untere Ende des Stators 301 erreicht hat.

Optional kann bei dem zweiten Verfahrensschritt 420 das Aushärten des Stators mittels der Heizeinrichtung fortgesetzt werden. Ferner kann auch zwischen dem zweiten Verfahrensschritt 420 und einem dritten Verfahrensschritt 430 das Aushärten des Stators mittels der Heizeinrichtung fortgesetzt werden, zum Beispiel 0,5, 1 oder 2 Minuten lang.

Bei dem dritten Verfahrensschritt 430 wird mit der Bewegungseinrichtung die Oberflächenschicht der zweiten Menge Imprägnierflüssigkeit horizontal in Bezug auf das untere Ende 306 des Stators 301 bewegt, während das untere Ende 306 des Stators 301 die Oberflächenschicht der zweiten Menge Imprägnierflüssigkeit berührt und die erste Menge Imprägnierflüssigkeit, die den Stator 301 bedeckt, ausgehärtet wird.

Dazu wird mit der Pumpe der Zirkulationseinheit der Bewegungseinrichtung Imprägnierflüssigkeit durch den Kanal 322 und die Zulauföffnungen 308 in den Tank 302 gepumpt, wobei gleichzeitig Imprägnierflüssigkeit durch die Ablauföffnungen 309 aus dem Tank 302 abläuft. Die dem Tank 302 pro Zeiteinheit zugeführte Imprägnierflüssigkeit entspricht der aus dem Tank 302 pro Zeiteinheit abgeführten Imprägnierflüssigkeit, so dass die Menge der am Boden des Tanks 302 befindlichen Imprägnierflüssigkeit, welche der zweiten Menge Imprägnierflüssigkeit entspricht, konstant bleibt.

Beim Bewegen der Oberflächenschicht wird das unteres Ende des Stators, an dem die Tropfen ansonsten entstünden, von Imprägnierflüssigkeit umspül. Dadurch wird vom Stator heruntergeflossene Imprägnierflüssigkeit weggespült, so dass sich diese Imprägnierflüssigkeit nicht in Form von Tropfen sammeln kann. Diese Imprägnierflüssigkeit kann in der zweiten Menge Imprägnierflüssigkeit aufgehen, also Bestandteil der zweiten Menge Imprägnierflüssigkeit werden.

Das Bewegen der Oberflächenschicht der zweiten Menge Imprägnierflüssigkeit kann solange fortgesetzt werden, bis die erste Menge Imprägnierflüssigkeit ausgehärtet ist oder zumindest einen Zustand erreicht hat, indem die erste Menge Imprägnierflüssigkeit nicht mehr von dem Stator 301 herabfließen kann, zum Beispiel einen gelförmigen Zustand. Für das Aushärten wird das Erwärmen des Stators 301 mit der Heizeinrichtung der Vorrichtung 300 beim dritten Verfahrensschritt 430 fortgesetzt.

Wenn das Aushärten beendet ist, wird das Verfahren beendet, kann aber mit einem anderen Stator, einem anderen Statorgehäuse und derselben Vorrichtung erneut ausgeführt werden.

## Patentansprüche

1. Verfahren zum Imprägnieren eines Stators (101, 201, 301) einer elektrischen Maschine, bei dem
- der Stator (101, 201, 301) mit einer ersten Menge Imprägnierflüssigkeit (104) bedeckt wird,
- eine zweite Menge Imprägnierflüssigkeit (105) unter dem Stator (101, 201, 301) angeordnet wird, so dass ein unteres Ende (106) des Stators (101, 201, 301) eine Oberflächenschicht (107, 207) der zweiten Menge Imprägnierflüssigkeit (105) berührt, und
- die Oberflächenschicht (107, 207) der zweiten Menge Imprägnierflüssigkeit (105) horizontal in Bezug auf das untere Ende des Stators (101, 201, 301) bewegt wird, während das untere Ende des Stators (101, 201, 301) die Oberflächenschicht (107, 207) der zweiten Menge Imprägnierflüssigkeit (105) berührt und die erste Menge Imprägnierflüssigkeit (104), die den Stator (101, 201, 301) bedeckt, ausgehärtet wird.

2. Verfahren gemäß Anspruch 1, bei dem der Stator (101, 201, 301) mit der ersten Menge Imprägnierflüssigkeit (104) bedeckt wird, indem der Stator (101, 201, 301) in Imprägnierflüssigkeit eingetaucht wird, die in einem Tank (102, 202) angeordnet ist.

3. Verfahren gemäß einem der Ansprüche 1 und 2, bei dem der Stator (101, 201, 301) mit der ersten Menge Imprägnierflüssigkeit (104) bedeckt wird, indem der Stator (101, 201, 301) in einem Tank (102, 202) angeordnet wird und der Tank (102, 202) mit Imprägnierflüssigkeit geflutet wird.

4. Verfahren gemäß einem der Ansprüche 2 und 3, bei dem eine Seitenwand des Tanks (102, 202) von einem Statorgehäuse (215, 315) gebildet wird, in dem der Stator (101, 201, 301) beim Betrieb der elektrischen Maschine verbleibt.

5. Verfahren gemäß einem der Ansprüche 2 bis 4, bei dem die zweite Menge Imprägnierflüssigkeit (105) unterhalb des Stators (101, 201, 301) angeordnet wird, indem der Tank (102, 202) von Imprägnierflüssigkeit entleert wird, bis eine Oberfläche der Imprägnierflüssigkeit das untere Ende des Stators (101, 201, 301) erreicht hat.

6. Verfahren gemäß einem der vorhergehenden Ansprüche, bei dem der Stator (101, 201, 301) so angeordnet wird, dass eine virtuelle Achse (112, 212) des Stators (101, 201, 301) vertikal ausgerichtet ist.

7. Verfahren gemäß einem der vorhergehenden Ansprüche, bei dem das untere Ende (106) des Stators (101, 201, 301) die Oberflächenschicht (107, 207) der zweiten Menge Imprägnierflüssigkeit (105) berührt, indem ein Wickelkopf des Stators (101, 201, 301) in die Oberflächenschicht (107, 207) der zweiten Menge Imprägnierflüssigkeit (105) getaucht wird.

8. Verfahren gemäß einem der vorhergehenden Ansprüche, bei dem das untere Ende (106) des Stators (101, 201, 301) die Oberflächenschicht (107, 207) der zweiten Menge Imprägnierflüssigkeit (105) berührt, indem das untere Ende (106) des Stators (101, 201, 301) 1 mm, 2 mm, 3 mm, 4 mm oder 5 mm tief in die zweite Menge Imprägnierflüssigkeit (105) getaucht wird.

9. Verfahren gemäß einem der vorhergehenden Ansprüche, bei dem die Oberflächenschicht (107, 207) der zweiten Menge Imprägnierflüssigkeit (105) horizontal in Bezug auf das untere Ende (106) des Stators (101, 201, 301) bewegt wird, indem die zweite Menge Imprägnierflüssigkeit (105) unter Verwendung einer Pumpe (113) zirkuliert beziehungsweise umgewälzt wird.

10. Verfahren gemäß einem der vorhergehenden Ansprüche, bei dem die erste Menge Imprägnierflüssigkeit (104), die den Stator (101, 201, 301) bedeckt, durch Verwendung einer Heizung vorgehärtet wird, bevor die zweite Menge Imprägnierflüssigkeit (105) unter dem Stator (101, 201, 301) angeordnet wird.

11. Vorrichtung (100, 200, 300) zum Imprägnieren eines Stators (101, 201, 301) einer elektrischen Maschine, welche aufweist:
- einen Tank (102, 202) zum Bedecken des Stators (101, 201, 301) mit einer ersten Menge Imprägnierflüssigkeit (104) und Anordnen einer zweiten Menge Imprägnierflüssigkeit (105) unter dem Stator, so dass ein unteres Ende (106) des Stators (101, 201, 301) eine Oberflächenschicht (107, 207) der zweiten Menge Imprägnierflüssigkeit (105) berührt, und
- eine Bewegungseinrichtung zum Bewegen der Oberflächenschicht (107, 207) der zweiten Menge Imprägnierflüssigkeit (105) horizontal in Bezug auf das untere Ende des Stators (101, 201, 301), während das untere Ende (106) des Stators (101, 201, 301) die Oberflächenschicht (107, 207) der zweiten Menge Imprägnierflüssigkeit (105) berührt und die erste Menge Imprägnierflüssigkeit (104), die den Stator (101, 201, 301) bedeckt, ausgehärtet wird.

12. Vorrichtung (100, 200, 300) gemäß Anspruch 11, welche eine Imprägnierflüssigkeitsbarriere (222) aufweist, die sich von einem Boden des Tanks (102, 202) bis zu der Oberflächenschicht (107, 207) der zweiten Menge Imprägnierflüssigkeit (105) erstreckt und ein erstes Reservoir (223) des Tanks (102, 202), das die zweite Menge Imprägnierflüssigkeit (105) aufnimmt, von einem zweiten Reservoir (224) des Tanks (102, 202) trennt, das die zweite Menge Imprägnierflüssigkeit (105) aufnimmt.

13. Vorrichtung (100, 200, 300) gemäß Anspruch 12, wobei das erste Reservoir (223) des Tanks (102, 202) eine Zulauföffnung (108, 208, 308) zum Zuführen von Imprägnierflüssigkeit in den Tank (102, 202) und/oder das zweite Reservoir (224) des Tanks (102, 202) eine Ablauföffnung (109, 209, 309) zum Abführen von Imprägnierflüssigkeit aus dem Tank (102, 202) aufweist.

14. Vorrichtung (100, 200, 300) gemäß Anspruch 12 oder 13, wobei das erste Reservoir (223) des Tanks (102, 202) das zweite Reservoir (224) des Tanks (102, 202) umgibt, oder das zweite Reservoir (224) des Tanks (102, 202) das erste Reservoir des Tanks (102, 202) umgibt.

15. Vorrichtung (100, 200, 300) gemäß einem der Ansprüche 12 bis 14, wobei das untere Ende des Stators (101, 201, 301) über die Imprägnierflüssigkeitsbarriere (222) fließende Imprägnierflüssigkeit berührt.
